(19) Europäisches Patentamt
European Patent Office
Office européen des brevets

(11) Publication number: **0 490 422 A1**

(12) **EUROPEAN PATENT APPLICATION**

(21) Application number: **91203108.5**

(51) Int. Cl.[5]: **C09D 5/03**, C09D 201/02

(22) Date of filing: **09.12.91**

(30) Priority: **12.12.90 NL 9002728**

(43) Date of publication of application:
**17.06.92 Bulletin 92/25**

(84) Designated Contracting States:
**AT BE CH DE DK ES FR GB GR IT LI NL SE**

(71) Applicant: **DSM N.V.**
**Het Overloon 1**
**NL-6411 TE Heerlen(NL)**

(72) Inventor: **van den Elshout, Wilhelmus Henricus Hubertus A.**
**Walramstraat 128-18**
**NL-6131 BP Sittard(NL)**
Inventor: **Wories, Herman Jelle**
**Romulushof 43**
**NL-6215 EJ Maastricht(NL)**
Inventor: **Kieft, Gerrit**
**De Oosteresch 5**
**NL-7783 CP Gramsbergen(NL)**

(74) Representative: **den Hartog, Jeroen Hendrikus Joseph et al**
**Octrooibureau DSM Postbus 9**
**NL-6160 MA Geleen(NL)**

(54) **Binder composition for powder coatings.**

(57) The invention relates to a binder composition for powder coatings.
The binder composition is essentially comprising

a) a compound which is based on a group comprising an active hydrogen bound to carbon,
b) a compound which contains at least one $\alpha,\beta$-unsaturated functional group, and
c) a blocked catalyst.

EP 0 490 422 A1

The present invention relates to a binder composition for powder coatings.

The article entitled "Powder Coatings in Europe" by Morandini (Pitture e Vernici 9/88, page 70), discloses that binder compositions are being sought as a basis for powder coatings which make possible polymerisation or curing at fairly low temperatures such as, for example, 130 ° C between 10 and 30 minutes.

The object of the invention is to provide a binder composition which can be used in powder coatings and which has a low curing temperature.

This object is achieved in that the binder composition is essentially comprising

a) a compound which is based on a group comprising an active hydrogen bound to carbon,

b) a compound which contains at least one $\alpha,\beta$ unsaturated functional group and

c) a blocked catalyst.

The present composition allows curing of the coating between for example 2 and 30 minutes both at higher temperatures, for example between 160 ° C and 240 ° C, and at lower temperatures, for example between 90 ° C and 160 ° C. In addition, good storage stability at temperatures between 10 ° C and 50 ° C, in particular at room temperature, is observed. The binder composition combines these properties with other desired coating properties such as excellent hardness, flow, colour stability and scratch resistance.

Preferably, the compounds which contain the active hydrogen bound to carbon containing functional group are compounds according to the formula (I):

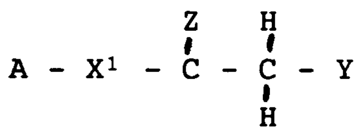

(I)

where

A = polyester, polyacrylate, polyurethane, polycarbonate, polyepoxide, a polymer based on bisphenol A-epoxyde, polyfluoridene, polyvinyl alcohol, (C,-$C_{20}$)alkyl groups which are substituted with functional groups or a polyol,

$X^1$ = O, NH or S,

Z = O or S,

Y =

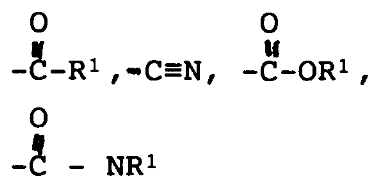

or $-NO_2$

and where $R^1$ = ($C_1$-$C_{10}$)alkyl, aryl, polyester, polyacrylate, polyurethane, polycarbonate, a polymer based on bisphenol A-epoxyde, polyfluoridene, polyvinyl alcohol, ($C_1$-$C_{20}$)alkyl groups which are substituted with functional groups or a polyol.

The molecular weight (Mn) of the compound according to formula (I) is between 200 and 20,000, more preferably between 200 and 5000. This molecular weight has been determined by GPC (gel permeation chromatography calibrated with polystyrene or polyethylene glycol standard)

Suitable polyesters for use as A or $R^1$ include hydroxyl-functional and carboxyl-functional polyesters.

Suitable polyesters preferably have an acid value of less than 50 mg KOH/g, preferably less than 30 mg KOH/g, and in particular, less than 5 mg KOH/g, a glass transition temperature between 20 ° C and 90 ° C, and a hydroxyl value of less than 100 mg KOH/g.

Preferred carboxyl-functional polyesters and the hydroxyl-functional polyesters may be obtained via standard preparation methods where the carboxylic acid is at least partly an aromatic polycarboxylic acids, such as phthalic acid, isophthalic acid, terephthalic acid, pyromellitic acid, trimellitic acid, 3,6-dichlorophthalic acid, tetrachlorophthalic acid, or (if obtainable) the anhydrides, acid chlorides or lower polyesters thereof. Usually the carboxylic acid component comprises at least 50 mol %, preferably at least 70 mol %, of isophthalic acid and/or terephthalic acid.

Other preferred polycarboxylic acids include cycloaliphatic and/or acyclic polycarboxylic acids such as,

for example, tetrahydrophthalic acid, hexahydroendomethylenetetrahydrophthalic acid, azelaic acid, sebacic acid, decanedicarboxylic acid, dimer fatty acid, adipic acid, succinic acid and maleic acid. These acids should be present in amounts of up to not more than 30 mol%, preferably up to not more than 20 mol%, of the total carboxylic acids. Hydroxycarboxylic acids and/or lactones, such as for example, 12-hydroxystearic acid, $\epsilon$-caprolactone and neopentyl glycol hydroxypivalate, can also be used. Minor amounts of monocarboxylic acids such as, for example, benzoic acid, tert-butylbenzoic acid, hexahydrobenzoic acid and saturated aliphatic monocarboxylic acids may also be added during the preparation.

Suitable diols for use in these polyesters include aliphatic diols such as ethylene glycol, 1,2-propanediol, 1,3-propanediol, 1,2-butane-diol, 1,4-butanediol, 1,3-butanediol, 2,2-dimethyl-1,3-propanediol (= neopentyl glycol), 2,5-hexanediol, 1,6-hexanediol, 2,2-[bis(4-hydroxycyclohexyl)]propane, 1,4-dimethylolcyclohexane, diethylene glycol, dipropylene glycol and 2,2-bis[4-(2-hydroxyethoxy)]phenylpropane. Smaller amounts of polyols such as glycerol, hexanetriol, pentaerythritol, sorbitol, trimethylolethane, trimethylolpropane and tris(2-hydroxy)alkylisocyanurate may also be used. Alternatively epoxy compounds may be used instead of diols or polyols. Preferably, the alcohol component of the polyester contains at least 50 mol% neopentyl glycol and/or propylene glycol.

The carboxyl-functional polyesters are prepared via known methods such as esterification or transesterification, which may optionally take place in the presence of standard catalysts such as, for example, dibutyltin oxide or tetrabutyl titanate. It is possible to obtain final products having an acid value of less than 50 mg KOH/gr by a suitable choice of the preparation conditions and of the COOH/OH ratio.

Suitable polyacrylates for use as A or R' may be based on methyl (meth)acrylate, ethyl (meth)acrylate, butyl (meth)acrylate, propyl (meth)acrylate, 2-ethylhexyl acrylate, cyclohexyl (meth)acrylate, decyl (meth)-acrylate, isodecyl (meth)acrylate, benzyl (meth)acrylate and hydroxyalkyl (meth)acrylates such as hydroxyethyl and hydroxypropyl (meth)acrylate. Other suitable polyacrylates are, for example, glycidyl esters or glycidyl ethers of alkyl (meth)acrylates. The polyacrylates can be obtained via the known processes.

Suitable polyols for use as A or $R^1$ include trimethylolpropane (TMP), cyclohexanedimethanol, ethylene glycol, 1,2- and 1,3-propylene glycol, 1,4-butanediol, 1,6-hexanediol, 2,5-hexanediol, diethylene glycol, 1,3-butanediol, 1,2-butanediol, sorbitol, (di)pentaerythritol, trishydroxyethyl isocyanurate (THEIC), glycerol, polyethylene glycol, polypropylene glycol and/or polytetrahydrofuran. Preferred polyols are TMP or THEIC.

A preferred compound of formula (I) is one wherein:

A = polyester, a polymer based on bisphenol A epoxyde or trihydroxyalkyl isocyanurate,
$X^1$ = O,
Z = O,
Y =

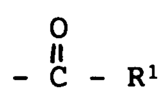

or-C ≡ N and
$R^1$ = $(C_1-C_4)$alkyl.

Consequently suitable components for use as component a) are polymers which contain, for example, acetoacetoxy groups or malonic acid (derivative) groups. The polymers are preferably polyesters, polyols or a polymer based on bisphenol A-epoxyde.

According to a furhter preferred embodiment of the invention, the reaction product of a trishydroxyalkyl isocyanurate and a tertiary alkyl acetoacetate or the reaction product of hydroxypolyester with a tertiary alkyl acetoacetate is used as component a) of the composition. The trishydroxyalkyl isocyanurate used is preferably trishydroxyethyl isocyanurate (THEIC) and the tertiary alkyl acetoacetate used is preferably tertiary butyl acetoacetate.

A compound according to the formula (I) can also be obtained by transesterification of an acetoacetate and a polyhydroxyl-functional compound described under A in the formula suitable for use in formula (I).

Suitable acetoacetate include methyl acetoacetate, ethyl acetoacetate, isopropyl acetoacetate, butyl acetoacetate, tert-butyl acetoacetate, methylbenzyl acetoacetate and/or dodecyl acetoacetate.

Said transesterification may be carried out at temperatures between 60 °C and 240 °C, preferably between 80 °C and 170 °C, in, for example, a nitrogen atmosphere. The reaction may take place in the presence of a catalyst such as, for example, dibutyltin oxide p-toluenesulphonic acid. The molar ratio of the chosen acetoacetate: polyhydroxyl-functional compound should be between 1.5:1 and 15:1, preferably between 2.5:1 and 7.5:1.

The polyacetoacetates can also be obtained by reacting diketene with a polyhydroxyl-functional

compound such as these described above. Such reactions are described in, for example, Journal of Paint Technology, volume 46, 991, April 1974, pages 70-75.

Preferably, the component b) of the present binder composition which contains at least one α,β-unsaturated group are compounds of formula (II):

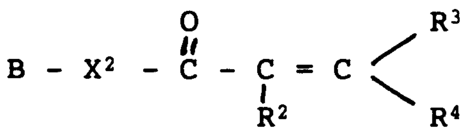

(II)

where:

B = polyester, polyacrylate, polyurethane, polycarbonate, polyepoxide, a polymer based on bisphenol A-epoxyde, polyfluoridene, polyvinyl alcohol, $(C_1-C_{20})$alkyl groups substituted with functional groups or a polyol,
$x^2$ = O, NH or S,
$R^2$ = H or $(C_1-C_4)$alkyl,
$R^3$ = H or $(C_1-C_4)$alkyl and
$R^4$ = H or $(C_1-C_4)$alkyl
and wherein $R^3$ and $R^4$ or $R^2$ and $R^4$ may form a ring containing 2-8 carbon atoms.

The molecular weight (Mn) of the compound according to formula (II) is between 180 and 20,000, more preferably between 180 and 7000.

Preferred compounds of formula (II) are those wherein:

B = polyester, a polymer based on bisphenol-A-epoxyde or trishydroxyalkyl isocyanurate,
$X^2$ = O,
$R^2$ = H or $CH_3$,
$R^3$ = H and
$R^4$ = H.

Compounds according to formula (II) which contain at least one α,β-unsaturated functional group are preferably polyesters containing acrylate groups, polyols or poly-bisphenol-A-epoxy and trishydroxyalkyl isocyanurate trisacrylate. Preferably the compound according to formula (II) is a trishydroxyethyl isocyanurate trisacrylate.

The preparation of compounds according to formula (II) may be carried out, for example, by reacting bisphenol-A-epoxy and acrylic acid at temperatures between 60°C and 80°C in the presence of a basic catalyst such as, for example, triethylamine.

According to a preferred embodiment of the invention, the blocked catalyst (c) of the binder composition is a blocked base containing one or more active hydrogen atoms bound to a basic atom.

The blocked catalyst comprises an unblocked base and a blocking agent.

Preferred unblocked bases include compounds according to the formulas (III) and (IV):

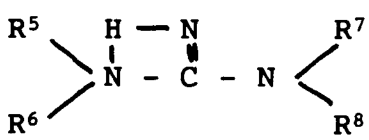

(III)

wherein

$R^5$ = H or $(C_1-C_{10})$alkyl,
$R^6$ = H or $(C_1-C_{10})$alkyl,
$R^7$ = H or $(C_1-C_{10})$alkyl and
$R^8$ = H or $(C_1-C_{10})$alkyl,
and wherein $R^5$ and $R^7$, $R^5$ and $R^6$, $R^7$ and $R^8$ and $R^6$ and $R^8$ may form a ring containing 2-10 carbon atoms;

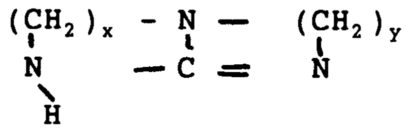

(IV)

where

y = 2, 3, 4 and

x = 2, 3, 4.

The unblocked bases according to formula (III) or (IV) preferably have a $PK_{acid} \geqq 11$.

The blocking agent used for these unblocked catalysts may, for example, be a compound containing isocyanate groups, an acylating compound or a (bi)carbonate.

Preferably, a compound containing isocyanate groups is used as blocking agent.

Suitable blocking agents containing isocyanate include monoisocyanates containing 1-20 carbon atoms such as, for example, phenyl isocyanate, tolyl isocyanate, butyl isocyanate and cyclohexyl isocyanate and diisocyanates such as, for example, hexane diisocyanate, isophorone diisocyanate, dicyclohexane methane diisocyanate, tetramethylxylene diisocyanate (TMXDI), toluene diisocyanate and diphenylmethane diisocyanate.

Suitable acylating compounds include anhydrides, such as for example propionic anhydride, and acetic anhydride, acid chlorides and carbonic esters.

Particularly preferred catalysts include a tetramethylguanidine blocked with isophorone diisocyanate (IPDI-di-TMG) and a tetramethylguanidine blocked with tetramethylxylene diisocyanate (TMXDI-di-TMG).

The blocking agent is used in combination with a base according to, for example, formula (III) or (IV). This produces a blocked compound which does not catalyse any (Michael) reactions at temperatures below 80 °C because no free base is present in the system. As a result of this, systems that are storagestable at room temperature are obtained. In addition, no gelation occurs during powder coating processing as a consequence of the blocking.

Powder coatings based on the binder composition according to the present invention can be cured at lower temperatures between 90 °C and 160 °C, but also at higher temperatures between 160 °C and 240 °C. The resulting films have the desired mechanical properties and solvent resistance.

The compound comprising the active hydrogen bound to carbon, the compound which contains at least one $\alpha,\beta$-unsaturated functional group and the blocked catalyst are preferably mixed at temperatures between 70 °C and 140 °C. The weight ratio between the compound comprising the active hydrogen bound to carbon and the compound containing at least one $\alpha,\beta$-unsaturated functional group is between 9:1 and 1:9, preferably between 6:1 and 1:6.

The molar equivalent ratio between the compound containing the active hydrogen and the compound containing at least one $\alpha,\beta$-unsaturated functional group is preferably between 1:10 and 2:1, more particularly, between 1:3 and 1.5:1. THe amount of catalyst is preferably between 0,05 and 3 % by weight, more preferably between 0,5 and 2% by weight (to the other components).

Of course, all of the standard additives such as, for example, pigments, fillers, flow-promoting agents, stabilisers and catalysts can be added to the coating systems. Suitable pigments are, for example, inorganic pigments such as titanium dioxide, zinc sulphide, iron oxide and chromium oxide, and organic pigments such as azo compounds. Suitable fillers are, for example, metal oxides, silicates, carbonates and sulphates.

Coatings based on the binder composition according to the invention can be used, for example, on wood and plastics. They can also be used as coating agents for, for example, general purpose industrial top coats, for top coats on machinery and equipment, in particular top coats on metal, for example for tins, domestic and other small equipment, cars and the like.

Although reaction products based on malonic acid or acetoacetic acid derivatives, polyacrylates and guanidine as catalyst are described in EP-A-310,011 and EP-A-160,824. These systems are completely unsuitable as a basis for powder coatings. These are two-component systems which cure at room temperature and which are used as a basis for solvent-based coatings. From a technical point of view, they are completely unusable because gelation occurs during the extrusion of the powder at, for example, 120 °C.

The invention is explained with reference to the following experiments and examples without being limited thereto.

<u>Examples</u>

Experiment I

Preparation of an acetoacetate-functional compound based on THEIC and tert-butyl acetoacetate

261 g of THEIC (1.0 mol) were dissolved in 440 g of tert-butanol at 60 °C in a round-bottomed flask. The temperature was raised to 120 °C and 506 g of tert-butyl acetoacetate (3.2 mol) were added in a period of 30 minutes. After a reaction time of 30 minutes, all of the volatile components were removed by means of a distil-lation (20 min., 160 °C, 760 mm Hg and 20 min., 140 °C, 10 mm Hg). After the distillation steps, the product was poured out as a light-yellow resin and cooled.

Experiment II

The preparation of an $\alpha$, $\beta$-unsaturated functional polymer based on bisphenol-A-epoxy and acrylic acid

1,042 g of bisphenol-A-epoxy (1.45 mol of epoxy) (Araldite GT 7004™; Ciba Geigy) and 1.8 g of chromium chloride (0.011 mol) in 10 g of acetone were heated to 140 °C in a round-bottomed flask. Then 105.5 g of acrylic acid (1.46 mol of acid) were added in a period of 40 minutes. After a reaction time of 60 minutes, the acid value was constant (4.3) and the resin was poured out and cooled.

Experiment III

The preparation of a catalyst (IPDI-di-TMG) based on isophorone diisocyanate (IPDI) and tetramethylguanidine (TMG)

115.1 g of TMG (1.00 mol) and 122.1 g of IPDI (0.55 mol) were stirred (under nitrogen) for 1 hour at a temperature of 100 °C. After 1 hour, 50 ml of ethanol and 0.05 of dibutyltin dilaurate (DBTDL) were added. Reaction was then carried out at 80 °C for 15 minutes. The product was then poured out into an aluminium dish and dried in a vacuum drying oven (20 °C, 20 mm Hg). The product was colourless and had a melting range between 45 and 55 °C.

Example I

The preparation of a powder coating

521 g of polymer according to Experiment II, 79 g of a compound according to Experiment I as crosslinking agent, 9 g of flow-promoting agent (Resiflow™, Worlée) 4.5 g of benzoin and 15.5 g of catalyst according to Experiment III were extruded at 120 °C. This composition was then cooled and ground to produce particles smaller than 90 µm. The powder obtained was used to coat bonderised panels.

After being cured for 10 minutes at 160 °C, the coating film had the desired solvent resistance, impact strength and storage stability. The solvent resistance was greater than 100 "acetone double rubs", the reversed impact (impact strength) was greater than 160 lb.inch and the storage stability at room temperature was longer than 6 months.

Experiment IV

The preparation of TMXDI-di-TMG

244 parts by weight of TMXDI were mixed with 230 parts by weight of TMG at 80 °C. After 1 hour, the viscous mixture was cooled and poured out into an aluminium dish. Isocyanate could no longer be detected with the aid of infrared analysis.

Example II

The preparation of a powder coating

522 parts by weight of polymer according to Experiment II, 78 parts by weight of crosslinking agent according to Experiment I and 16.5 parts by weight of catalyst according to Experiment IV were mixed at 80 °C and then cooled and ground to produce powder particles smaller than 90 µm. At 150 °C, said powder

had a gel time of 140 seconds. Said powder was used to coat bonderised panels (50 µm layer thickness).

Example III

The preparation of a powder coating

Example II was repeated with 300 parts by weight of $TiO_2$ also being added as a pigment. Said powder had a gel time of 110 seconds at 150 ° C.

| Properties of the powder coatings obtained according to Examples II and III | | | |
|---|---|---|---|
| System according to example: | Curing for 20' at 120 ° C | | Storage stability |
| | acetone rubs | reversed impact | |
| II | >100 | + | > 6 months |
| III | >100 | + | > 6 months |

The curing had to meet values of greater than 100 for "acetone double rubs" and values for the reversed impact (measured according to ASTM-D-2794-69) of greater than 160 lb. inch (which was indicated by +). The storage stability was determined at 25 ° C.

Comparative Experiment A

The preparation of a powder coating

Example I was repeated with TMG being used as catalyst instead of IPDI-di-TMG. As a result of using the unblocked TMG catalyst instead of IPDI-di-TMG, extrusion at 120 ° C was found to be impossible owing to gelation.

From the examples described it was evident that a binder composition based on a compound which is based on a group comprising an active hydrogen bound to carbon, a a compound which contains at least one α,β-unsaturated functional group and a blocked catalyst results in systems which can be cured at low temperature and also results in good storage stability and good processing properties.

## Claims

1. Binder composition for powder coatings, characterised in that the binder composition is essentially comprising
   a) a compound which is based on a group comprising an active hydrogen bound to carbon,
   b) a compound which contains at least one α,β-unsaturated functional group, and
   c) a blocked catalyst.

2. Binder composition according to claim 1, characterised in that the compound comprising an active hydrogen bound to carbon is a compound of formula (I):

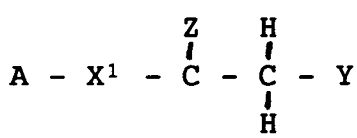

(I)

wherein:

A = polyester, polyacrylate, polyurethane, polycarbonate, polyepoxide, a polymer based on bisphenol A-epoxyde, polyfluoridene, polyvinyl alcohol, ($C_1$-$C_{20}$)alkyl groups which are substituted with functional groups or a polyol,

$X^1$ = O, NH or S,

Z = O or S,

Y =

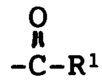 , $-C\equiv N$, 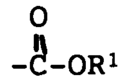 ,

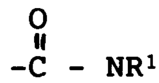

or $-NO_2$

and where $R^1$ = $(C_1\text{-}C_{10})$alkyl, aryl, polyester, polyacrylate, polyurethane, polycarbonate, a polymer based on bisphenol A-epoxyde, polyfluoridene, polyvinyl alcohol, $(C_1\text{-}C_{20})$alkyl groups which are substituted with functional groups or a polyol.

**3.** Composition according to any one of claims 1-2, characterised in that the compound which is based on a group comprising an active hydrogen bound to carbon is the reaction product of trishydroxyalkyl isocyanurate and tertiary alkyl acetoacetate or the reaction product of a hydroxypolyester with a tertiary alkyl acetoacetate.

**4.** Binder composition according to any one of claims 1-3, characterised in that the compound containing at least one $\alpha,\beta$-unsaturated group is a compound according to the formula (II):

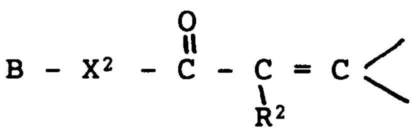 (II)

where:

B = polyester, polyacrylate, polyurethane, polycarbonate, polyepoxide, a polymer based on bisphenol A-epoxyde, polyfluoridene, polyvinyl alcohol, $(C_1\text{-}C_{20})$alkyl substituted with functional groups or a polyol,
$X^2$ = O, NH or S,
$R^2$ = H or $(C_1\text{-}C_4)$alkyl,
$R^3$ = H or $(C_1\text{-}C_4)$alkyl and
$R^4$ = H or $(C_1\text{-}C_4)$alkyl

and wherein $R^3$ and $R^4$ or $R^2$ and $R^4$ may form a ring containing 2-8 carbon atoms.

**5.** Binder composition according to claim 4, characterised in that the compound is trishydroxyethyl isocyanurate trisacrylate.

**6.** Binder composition according to any one of claims 1-5, characterised in that the blocked catalyst is a blocked base containing one or more hydrogen atoms bound to a basic atom.

**7.** Binder composition according to claim 6, characterised in that the blocked catalyst is based on an unblocked base according to formula (III) and (IV):

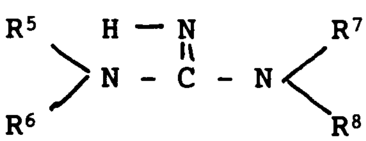 (III)

where

$R^5$ = H or $(C_1\text{-}C_{10})$alkyl,
$R^6$ = H or $(C_1\text{-}C_{10})$alkyl,
$R^7$ = H or $(C_1\text{-}C_{10})$alkyl and
$R^8$ = H or $(C_1\text{-}C_{10})$alkyl,

and wherein $R^5$ and $R^7$, $R^5$ and $R^6$, $R^7$ and $R^8$ and $R^6$ and $R^8$ may form a ring containing (2-10) carbon

atoms;

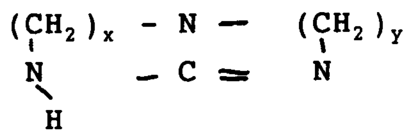

(IV)

where

y = 2, 3, 4 and

x = 2, 3, 4.

**8.** Binder composition according to any one of claims 1-7, characterised in that the blocked catalyst is tetramethylguanidine blocked with isophorone diisocyanate or tetramethylguanidine blocked with tetramethylxylene diisocyanate.

**9.** Powder coating based on a binder composition according to any one of claims 1-8.

**10.** Process for preparing powder coatings based on a binder composition according to any of claims 1-9, characterised in that the curing reaction takes place at temperatures between 90 °C and 240 °C between 2 and 30 minutes.

**Claims for the following Contracting State : Es**

**1.** Process for preparing powder coatings, characterised in that the binder composition is essentially comprising

a) a compound which is based on a group comprising an active hydrogen bound to carbon,

b) a compound which contains at least one $\alpha,\beta$-unsaturated functional group, and

c) a blocked catalyst and

that the curing reaction takes place at temperatures between 90 °C and 240 °C between 2 and 30 minutes.

**2.** process for preparing powder coatings, characterised in that the compound comprising an active hydrogen bound to carbon is a compound of formula (I):

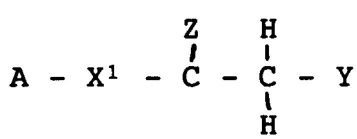

(I)

wherein:

A = polyester, polyacrylate, polyurethane, polycarbonate, polyepoxide, a polymer based on bisphenol A-epoxyde, polyfluoridene, polyvinyl alcohol, $(C_1-C_{20})$alkyl groups which are substituted with functional groups or a polyol,

$X^1$ = O, NH or S,

Z = O or S,

Y =

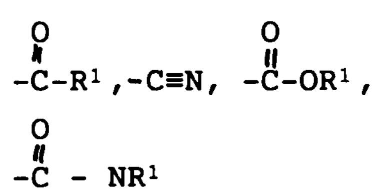

or $-NO_2$

and where $R^1$ = $(C_1-C_{10})$alkyl, aryl, polyester, polyacrylate, polyurethane, polycarbonate, a polymer

based on bisphenol A-epoxyde, polyfluoridene, polyvinyl alcohol, ($C_1$-$C_{20}$)alkyl groups which are substituted with functional groups or a polyol.

**3.** Process for preparing powder coatings according to any one of claims 1-2, characterised in that the compound which is based on a group which is based on a group comprising an active hydrogen bound to carbon is the reaction product of trishydroxyalkyl isocyanurate and tertiary alkyl acetoacetate or the reaction product of a hydroxypolyester with a tertiary alkyl acetoacetate.

**4.** Process for preparing powder coatings according to any one of claims 1-3, characterised in that the compound containing at least one $\alpha,\beta$-unsaturated group is a compound according to the formula (II):

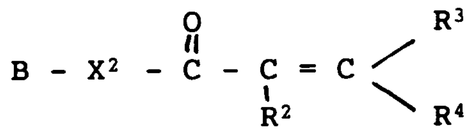

(II)

where:

B = polyester, polyacrylate, polyurethane, polycarbonate, polyepoxide, a polymer based on bisphenol A-epoxyde, polyfluoridene, polyvinyl alcohol, ($C_1$-$C_{20}$)alkyl substituted with functional groups or a polyol,
$X^2$ = O, NH or S,
$R^2$ = H or ($C_1$-$C_4$)alkyl,
$R^3$ = H or ($C_1$-$C_4$)alkyl and
$R^4$ = H or ($C_1$-$C_4$)alkyl

and wherein $R^3$ and $R^4$ or $R^2$ and $R^4$ may form a ring containing 2-8 carbon atoms.

**5.** Process for preparing powder coatings according to claim 4, characterised in that the compound is trishydroxyethyl isocyanurate trisacrylate.

**6.** Process for preparing powder coatings according to any one of claims 1-5, characterised in that the blocked catalyst is a blocked base containing one or more hydrogen atoms bound to a basic atom.

**7.** Process for preparing powder coatings according to claim 6, characterised in that the blocked catalyst is based on an unblocked base according to formula (III) and (IV):

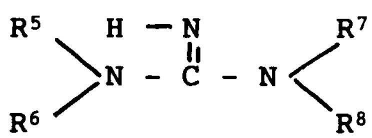

(III)

where

$R^5$ = H or ($C_1$-$C_{10}$)alkyl,
$R^6$ = H or ($C_1$-$C_{10}$)alkyl,
$R^7$ = H or ($C_1$-$C_{10}$)alkyl and
$R^8$ = H or ($C_1$-$C_{10}$)alkyl,

and wherein $R^5$ and $R^7$, $R^5$ and $R^6$, $R^7$ and $R^8$ and $R^6$ and $R^8$ may form a ring containing (2-10) carbon atoms;

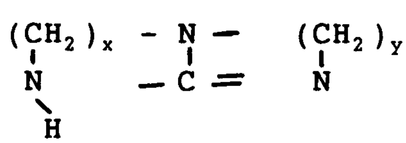

(IV)

where

y = 2, 3, 4 and

x = 2, 3, 4.

**8.** Process for preparing powder coatings according to any one of claims 1-7, characterised in that the blocked catalyst is a tetramethylguanidine blocked with isophorone diisocyanate or a tetramethylguanidine blocked with tetramethylxylene diisocyanate.

European Patent Office

# EUROPEAN SEARCH REPORT

Application Number

EP 91 20 3108

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 160 824 (HOECHST)<br>--- | | C 09 D 5/03<br>C 09 D 201/02 |
| A,D | EP-A-0 310 011 (HOECHST)<br>--- | | |
| A | DE-A-3 001 060 (HULS)<br>----- | | |
| | | | TECHNICAL FIELDS SEARCHED (Int. Cl.5) |
| | | | C 09 D<br>C 08 G |

The present search report has been drawn up for all claims

| Place of search | Date of completion of the search | Examiner |
|---|---|---|
| THE HAGUE | 20-03-1992 | BUSCAGLIONE Y. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document